# EUROPEAN PATENT SPECIFICATION

(11) **EP 1 251 448 B1**
(45) Date of publication and mention of the grant of the patent: **15.10.2008**
(21) Application number: 00976467.1
(22) Date of filing: 09.11.2000
(51) Int. Cl.: G06K 9/00, G06K 19/14

(54) **METHOD, DEVICE AND SYSTEM FOR BIOMETRIC IDENTIFICATION**
VERFAHREN, ANORDNUNG UND SYSTEM FÜR BIOMETRISCHE IDENTIFIKATION
PROCÉDÉ , DISPOSITIF ET SYSTÈME D'IDENTIFICATION BIOMÉTRIQUE

(30) Priority: 11.01.2000 RU 2000101180
(43) Date of publication of application: 23.10.2002
(73) Proprietor: Mnogoprofilnoe Predpriyatie OOO "ELSYS", St.Petersburg, 198092 (RU)
(72) Inventor: MINKIN, Viktor Albertovich, St.Petersburg, 196247 (RU); GREKOVICH, Alexandr Anatolievich, St.Petersburg, 197349 (RU); ROMANOVA, Ljudmila Pavlovna, St.Petersburg, 194021 (RU); TATAURSCHIKOV, Sergei Sergeevich, St.Petersburg, 194223 (RU); SHTAM, Alexandr Iliich, St.Petersburg, 197343 (RU); ZONOV, Viktor Fedorovich, Leningradskaya obl., 188660 (RU)
(74) Representative: Viering, Jentschura & Partner
(86) International application number: PCT/RU2000/000446
(87) International publication number: WO 2001/052174

(56) References cited:
- WO-A-99/66448
- WO-A1-97/05578
- WO-A1-99/66448
- US-A- 4 338 025
- US-A- 4 455 083
- US-A- 5 144 680
- US-A- 5 473 144
- US-A- 5 493 621
- US-A- 5 548 106
- US-A- 5 869 822

## Description

### Technical Field

The invention relates to biometric identification with optical reading of biometric information and can be used in any areas where it is needed to carry out user identification including security and access systems, various transactions including financial transaction with the use of personalised credit cards, passport systems for population, manufacture and use of various personalised documents such as driver's licenses, etc. Then to simplify understanding of the invention essence, it will be described mainly with the application to the use as a biometric parameter of one or several fingerprints. However the invention also covers the use of any other biometric parameters being suitable for the identification purposes, for example, retina images or user signatures.

### Prior Art

The user identification methods are known that use information not connected with a biometric parameter containing, for example, a personalized identification number (PIN) recorded directly on a plastic card or in the memory of a contact or contact-free chip located on the same plastic card or a special carrier. Information recorded on such card can represent a non-repeatable number or support a ciphered exchange dialogue between the information carried and the reading system (US 6068184, US 5991749). These methods and systems are easy and reliable in operation but are not protected against unauthorised use after loss of the carrier, which can be used by any person.

At the present time, a whole number of user identification systems are known, which use biometric dactyloscopic information. The principle of operation of most similar systems is based on optical reading of a biometric parameter of the user being identified by means of the corresponding reading device, conversion of the readout information into a digital electronic code and search in the database for an electronic code matching, in essence, this electronic code. If such matching takes place, then a signal on a positive result of the user identification will be issued. Similar systems and identification methods implemented therein as well as devices being used in the given systems are described, for example, in US 4933976, US 4932776, US 4785171, US 4690554, US 4582985.

The known systems implementing this principle contain various biometric parameter reading devices differing, in particular, by the type of photo-receiver being used and by the lighter design. So in WO 98/27509, a user identification device is described, which allows to enter a live finger image with a high image quality and which contains a lighter illuminating the user finger and the sensor with the inlet fibre-optic surface, onto which the user finger is put.

Light scatters in the finger and passes through the skin in places (lines) pressed against the inlet surface, with minimal losses; at places not pressed against the surface (in hollows), the light losses are considerably high. Because of that, an optical image is being created and an electronic fingerprint image based thereon, which is then converted into an electronic code for the image being read out. The lighter design of this device is optimised with the account of light scattering peculiarities in a real ("live") finger, which restricts the use of the given device and the method, which it implements, by the identification by real fingerprint at its comparison with the electronic codes being stored in the database.

Instead of storing user biometric parameter codes in the database, they can be recorded on biometric keys being plastic cards to be issued to users and read out from these keys in order to be compared with a signal being obtained as a result of the corresponding conversion of the read-out biometric parameter, as it has been described, for example, in US 4993068, US 5598474 and US 5623552. The identification signal is issued in case of mutual correspondence of the information written on the card and obtained at the biometric parameter readout.

In particular, a possibility is known to write information, including that on a plastic card, in the form of a two-dimensional bar-code (US 5548110, US 6062481). However recording of dactyloscopic information or a fingerprint code may contain approximately 1 Kbyte, and a two-dimensional bar-code of such size will occupy almost half of the plastic card. Consequently, recording of information about two fingers of the user on one plastic card is practically impossible, since besides dactyloscopic information, PC should provide space for recording the user demographic data. In addition, two-dimensional bar-code readout devices are sufficiently sophisticated and expensive, which also impedes the use of this bar-code for recording of dactyloscopic information on plastic cards in mass projects, in spite of a low cost of the card itself.

A common shortcoming of known identification systems with the use of a contact-free chip plastic card is also a high level of expenses, which is especially sensible at the implementation of such mass personalised projects as issuance of national passports, driver's licenses and other documents. The cost of such projects will be determined mainly by the cost of chip plastic cards. For example, the issue of passports for 100 million people based on a chip plastic card costing approximately USD 15 will require USD 1.5 billion.

The use of contact chip cards for passport project is impossible, as, in spite of a considerably lesser cost (USD, 3-5 on average), the reliability of the contact chip operation is not sufficient, as they can easily be subject to destruction.

In connection with the above-listed drawbacks, these devices and systems have not yet reached mass application.

A system is also known (described in US 4983036), where information written on a plastic card, which is used as a biometric key, is the optic image of a fingerprint. In the identification process, this image is to be compared with the optical image of the real fingerprint by means of autocorrelation of the image of the optically projected fingerprint-reflected light in respect of the fingerprint on the card. A similar comparison method is very laborious and unreliable.

WO 99/66448 A1 discloses a method and system for producing identification documents. This system comprises a verification system which determines the identity of a user. This verification system includes, for example, a camera, a keyboard, a fingerprint imaging device or an electronic scanning device.

US 4 455 083 A discloses a method and an apparatus for verifying the fingerprint of the bearer of a card by comparing the fingerprint of the bearer with the fingerprint of the person to whom the card is issued.

The fingerprint is imprinted with reflective material in a transparent region of the card. For authentication the finger of the bearer of the card is placed over the imprinted negative fingerprint and the level of reflection of illumination from below the card is measured.

US 5 473 144 A discloses a credit card having thereon an actual enhanced authorized card holders finger print and corresponding digitized representation of the actual finger print.

US 5 493 621 A discloses a fingerprint ID system, which compares input fingerprint image data with registered data, with a digital signal processor exclusive for image processing use, independently of a central processing unit.

### Summary of the Invention

The invention is set out in independant claims 1 and 10.

The main task, which is the target of this invention, is to ensure a simple, convenient and reliable user biometric identification with the use of at least one optical biometric parameter image being formed on the biometric key.

A further problem is to provide a simple, convenient and reliable user biometric identification with the use of at least one optical biometric parameter image being formed on the biometric key, functioning without the necessity of calling of the verified electronic code database.

The next problem is to secure a simple, convenient and reliable user biometric identification with the joint use of at least one optical biometric parameter image being formed on the biometric key and the information being obtained at the direct reading of the similar biometric parameter by means of an optical readout device or a readout unit.

Another problem is to provide an opportunity to carry out user biometric identification with the use of two protection levels based on verified dactyloscopic information and with the use of one and the same optical readout device or a readout unit for reading of at least one optical image from the biometric key and the similar "real" biometric parameter.

This invention providing the solution of the above listed and other problems, which will be clear from the detailed description of the inventions given hereinafter, is based on the experimental establishment of a possibility of reading of optical images of some biometric parameters, first of all, of fingerprints, from the surface of a plastic carrier manufactured from a material with the integral absorption of optical radiation in certain spectrum regions being close to finger absorption. Accordingly, this invention based on the use of optical images of biometric parameters written on a certain plastic carrier (hereinafter referred to as the "biometric key"), provides a user identification method and a user identification device with the features according to the independent claims. Preferred embodiments are described in the dependent claims.

The user identification method includes preferably the following operations:
(f) matching of the image of the selected biometric parameter for an individual user, for example, his/her fingerprint, with the inlet optical surface of the readout sensor made on the basis of a multi-element photo-detector being sensitive in the selected spectral interval; at that the above-mentioned image has been formed on the biometric key of the given user in the area made from a material being semi-transparent in the selected spectral interval of the optical range, with the use of a printing means, for example, a paint being non-transparent or reflecting radiation in this spectral interval;
(g) readout of the above-mentioned image by the readout sensor with generation of the electronic code of the image;
(j) matching of the selected biometric parameter with the inlet optical surface of the reading sensor made on the basis of a multi-element photo-detector being sensitive in the selected spectral interval;
(k) readout of the above-mentioned biometric parameter with generation of the electronic code of the readout parameter in the format providing a possibility of comparison of this electronic code with the above-mentioned electronic code of the readout image,
(m) comparison of the electronic code of the readout biometric parameter and the electronic code of the readout image; and
(n) output of the user identification result based on the results of comparison of electronic codes of the biometric parameter and the readout image.

In one of its preferable implementation options, the method concerning this invention also provides a stage for the biometric key manufacture and the formation of a database of verified electronic codes of biometric parameters of the users to be subject to identification, this stage including the following operations:
(a) selection of the biometric parameter for an individual user, for example, his/her fingerprint;
(b) generation of the optical image of the selected user biometric parameters from a variety of users;
c) recording of the generated image with the scaling being equal or close to 1 on a blank for the biometric key of the given user in the image area made from a material being semi-transparent in the selected spectral interval of the optical range, with the use of a printing means, for example, a paint being non-transparent or reflecting radiation in this spectral interval;
(d) generation of at least one verified electronic code of the selected biometric parameter and its saving for permanent storage in the selected format in the form of a set of digital signals unambiguously corresponding to the specified biometric parameter;
(e) repeated execution of operations (b), (c) and (d) for the remaining users out of the variety of users with obtaining of one biometric key for each user and with generation of the database of verified electronic codes of selected biometric parameters;

In order to enhance the identification reliability, the method under this invention can also include additionally the following operations:
(j) combination of the selected biometric parameter of the user being identified with the above-mentioned inlet optical surface of the reading sensor made on the basis of a multi-element photo-detector being sensitive in the selected spectral interval;
(k) readout of the specified biometric parameter with generation of its electronic code providing a possibility of comparison of the electronic code of the readout biometric parameter with the verified electronic codes;
(l) search for a verified electronic code coinciding, in essence, with the electronic code of the readout biometric parameter,
   with operation (i) additionally including the results of operation (I).
   In this implementation version, the identification method at the stage of biometric key manufacture preferably includes the operation of
(o) generation of all verified electronic code of the selected biometric parameter and its saving for permanent storage for all users out of the variety of users in the form of a set of digital signals unambiguously corresponding to the specified biometric parameter, with generation of the database of verified electronic codes of selected biometric parameters in the format providing a possibility of comparison of the electronic code of the readout biometric parameter with the verified electronic codes;

in addition, operation (m) consists of comparison of the electronic codes of the readout biometric parameter and the readout image with verified electronic codes, and a decision on the positive identification result shall be taken at the detection of a verified electronic code, which, in essence, coincides with the electronic code of the readout biometric parameter and/or readout image.

Examples of materials especially suitable for manufacture of the biometric key are polyvinylchloride (PVC) or polyester (PET), which are conventionally used for the plastic card manufacture. At that, the best results of the readout of optical biometric parameter images are reached at the uniform illumination of the carrier in transmitted light within the selected spectral interval, which preferably lies in the near infrared region (0.75 - 1.0 µm). In this case, the preferable thickness of the optical image carrier equals to about 0.8 mm, i.e. coincides with the standard thickness of plastic cards. It is evident that the reverse side of the plastic card (opposite to the side, on which the biometric parameter image, for example, fingerprint image, is applied) shall not contain images being non-transparent in the selected region of the spectral interval, as the availability of such images may lead to the appearance of significant disturbances on the readout biometric parameter image.

The authors of the invention have experimentally established that any colour and grey-scale black-and-white printing of standard printers and DataCard (Image Card Express Photo ID Printer, DataCard 9000) and Fargo (Pro-L, Quatro) plastic card printing systems is transparent in the selected spectral range whereas printing from a black tape is practically non-transparent in the specified spectral range.

The next condition providing a high readout quality is scaling of the biometric parameter image at its generation on the biometric key. There is the only difference in the resolution of readout facilities and means generating the image. For example, normal thermal printing facilities for plastic cards have the resolution not higher than 300 dpi whereas the image readout facilities can have the resolution up to 3000 dpi. Analysing large dactyloscopic image archives, the authors have established that the number of visible dactyloscopic peculiarities suitable for identification increases as the resolution of a dactyloscopic scanner grows. As a consequence of this dependence, it appears that, for example, at printing of a fingerprint image or its part enlarged proportionally to the reduction in the area with constant resolution, an approximately equal number of critical points both on the whole fingerprint and on its part. Consequently, the location of the enlarged image of the central part of the fingerprint on the plastic card is an additional measure allowing to avoid errors during the identification, as at every placing of the user finger, the probability of presence of the central fingerprint part is considerably higher than that of its edge parts.

At least two images of the corresponding biometric parameters can be generated on one biometric key preferably made in the form of a plastic card. An opportunity to place several fingerprint images on one plastic card significantly increases the probability of proper identification; the central-symmetrical location of fingerprints on the plastic card allows not to use moving mechanical parts in the readout unit of the identification device.

According to the second aspect of this invention, in order to execute all above-listed operations of the proposed method, it is provided to create a user identification system containing the following:
a means for recording of at least one image of one biometric parameter of an individual user out of the variety of users, for example, his/her fingerprints, on a biometric key blank, in the image area made from a material being semi-transparent in the selected spectral interval of the optical range, with the use of a printing means, for example, a paint being non-transparent or reflecting radiation in this spectral interval;
a subsystem for generation and storage of the database of verified electronic codes for each specified biometric parameter of every user out of the variety of users; and
at least one user identification device.

In accordance with the next aspect of this invention, it is also provided to create a new user identification device, which contains the following:
a readout unit containing at least one readout sensor equipped by a multi-element photo-detector being sensitive in the selected spectral interval of the optical range; in addition, the readout unit is made with a possibility of reading the image from a biometric key out of the variety of biometric keys, each of which is intended for identification of user out of the variety of users and contains an image area made from a material being semi-transparent in the selected spectral interval of the optical range, in which an image of the biometric parameter of the specified user has been generated with the selected scaling;
a lighter providing uniform illumination of the readout sensor by radiation in the selected spectral interval of the optical range;
a holder for installation and fixation of any biometric key out of specified variety of keys with bringing of the image generated thereon into contact with the inlet sensitive surface of the readout sensor; and
a processor unit connected to the readout unit outlet and equipped by means for the generation of an electronic code of the readout image and by means for comparison of the electronic code of the readout image with other electronic codes with generation of the first signal in case of detection of coincidence of the electronic code of the readout image with any other electronic code and with generation of the second signal, if no above-mentioned coincidence has been detected.

Besides those mentioned above, one more preferable condition providing high quality readout is the use of a readout sensor with the inlet fibre-optic surface, against which the image being read out must be tightly pressed. At the performance of this and other conditions listed, a possibility of using similar or even one and the same optical readout sensor for reading a real biometric parameter (a fingerprint, i.e. a relief object) and its flat carrier from the plastic carrier.

The use of one sensor for reading both a live finger image and a visible image from the card allows to simplify the identification device design and operations to be executed by the user at the implementation of the identification method under this invention. In addition, the system operation reliability gets considerably enhanced, as unlike a chip PC a fingerprint being stored in the form of a real visible image on the biometric key made in the form of a plastic card has a good noise immunity and does not sensitive to electric and magnetic fields. Another advantage of this device is an additional possibility of future modernisation and the compatibility meaning that the software identification algorithms are being constantly improved, with the main modifications concerning conversion of the image into a compressed code. In a chip, only a compressed code is stored, which will not allow or impede a future use of any new software. The information storage in the form of an optical image of the biometric parameter will allow to use all future software improvements without any considerable expenses, this being simultaneously for reading of both the biometric parameter itself and its image on the biometric key.

The above-listed advantages make it impossible to broadly use the proposed invention, both for local systems and for global projects, for example, national passport system, authorisation of access to Internet or additional protection of credit cards.

The remaining distinctive signs and advantages of this invention will become clear from the detailed description of preferable versions of its implementation given below as well as from the invention formula being enclosed herewith.

### Brief description of drawings

Fig. 1 shows one of the preferable versions of embodiment of the user identification system under this invention in the form of a flow-chart;
Fig. 2 shows the front side of a plastic card;
Fig. 3A contains a user identification device in the form of an arrangement with the biometric key being introduced therein;
Fig. 3B shows the same device with a user finger being placed into it;
Fig. 4 shows a set of operations to be executed at the first stage of one of the preferable versions of implementation of the method under this invention;
Fig. 5A, 5B show a non-processed image and a processed image of one and the same fingerprint respectively;
Fig. 6, 7 and 8 show sets of operations to be executed at the second stage of two preferable versions of implementation of the method under this invention.

### Description of preferable implementation of the invention

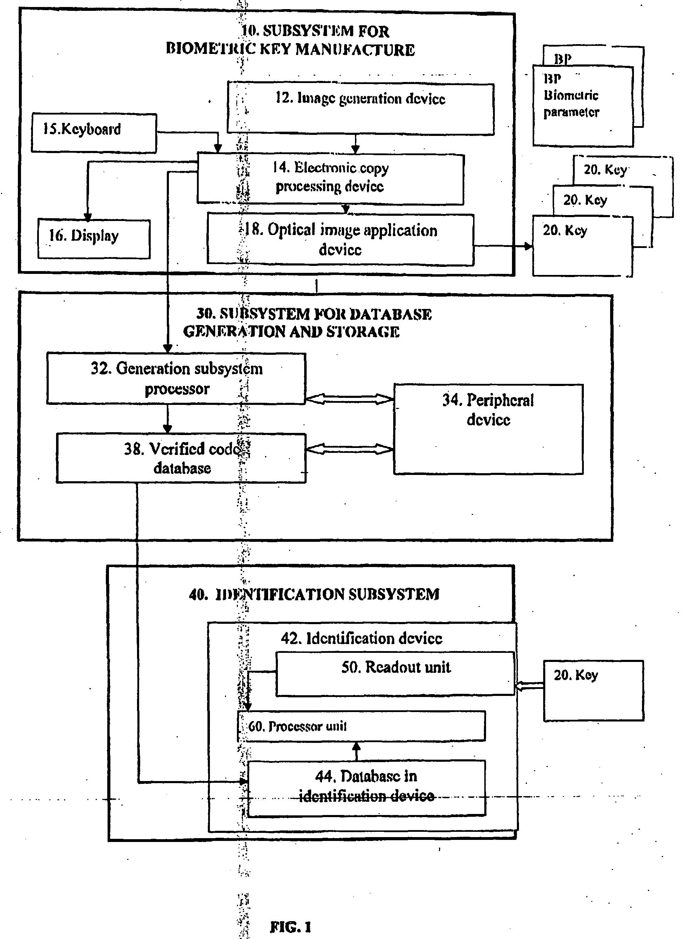

The system version shown in Fig. 1 and designated on the whole as 1 is intended mainly for operation with biometric keys in the form of plastic cards with the standard parameters in accordance with ISO 7810-85 and sizes in accordance with CR80. However it can also be used for manufacture and use of many other versions of biometric keys. As shown in Fig. 1, system 1 consists of several interconnected parts, or subsystems, the main from which are subsystem 10 for manufacture of biometric keys 20, subsystem 30 for generation and storage of the verified electronic code database and subsystem 40 for identification.

Subsystem 10 for the manufacture of biometric keys includes a set of necessary technical means or devices to execute various operations provided by the key manufacture technology being used in the system. It is evident that the composition of this set and the form of embodiment of its components considerably depend upon a specific version of the identification key being used. However an obligatory part of any version of system 10 are means for recording the optical image of the selected biometric parameter on biometric key 20. These means of recording preferably include device 12 for generation of an image of the selected biometric parameter with the conversion of this image into its electronic copy, i.e. into a set of electrical (or other) signals unambiguously corresponding to the image being generated. Device 12 can operate in any wavelength range and/or use any suitable image generation and conversion means provided the quality of the electronic copy being obtained is sufficient for the subsequent creation of an optical image on the biometric key being suitable for the performance of the user identification function. As device 12, for example, any scanner or a device for reading biometric parameters, for example, a dactyloscopic scanner, can be used for obtaining of a fingerprint image and/or a television camera for obtaining of user retina or face images.

Another, not obligatory but preferable, component of subsystem 10 is device 14 for electronic copy processing. The type of processing being performed by this device will be explained later at the description of the identification method under this invention. A preferable version of implementation of device 14 is a personal computer equipped by the corresponding software program for processing images and by necessary peripheral devices, including keyboard 15, display 16 as well as an interface (not shown) for reading electronic copies being supplied from the outlet of device 12 for image generation.

The third component of the means of recording is device 18 for application of an optical image on biometric keys 20. Preferably, device 18 is a printer for personalisation of plastic cards connected to the outlet of device 14 and customised for printing images in case f obtaining of processed or non-processed electronic copy from device 14.

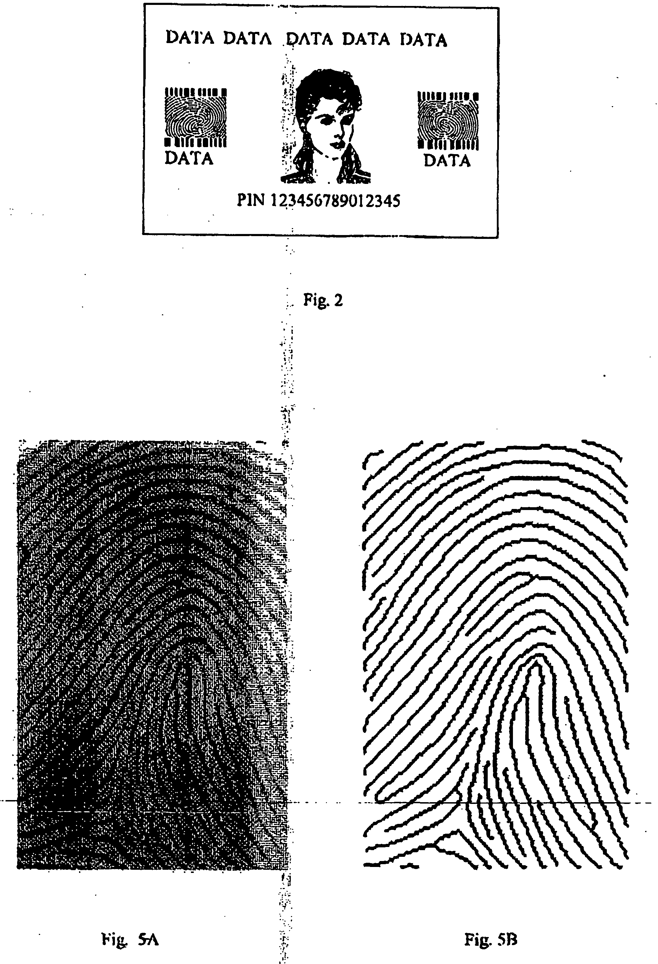

Fig. 2 shows a conventional image of the front side of the biometric key pattern in the form of a personalised plastic card with standard parameters in accordance with ISO 7810-85 and sizes in accordance with CR80 (85 mm x 54 mm x 0.8 mm). As shown in Fig. 2, two areas 22 of image are provided for printing the image on biometric key 20, which are made from a material being semi-transparent in the selected spectral interval of the optical range (for example, 0.75 - 1.0 µm, i.e. in the near IR-region). If the biometric key is a plastic card, then the whole card can be made from this material. In particular, suitable materials for area 22 and the biometric key on the whole are polyvinylchloride and polyester.

It can be seen from Fig. 2 that biometric key 20 may, beside a biometric parameter image or several similar images (for example, fingerprints of two or more different fingers of the user), also contain any other necessary information in the wording, digital, symbolic, graphical. Electronic, magnetic or any other suitable form.

An additional information can be written on the biometric key at the same time with recording of the biometric parameter image, with the use of one and the same device 18 for the application of images, or at any other suitable stage of the biometric key manufacture, with the use of any means being suitable for this purpose. As these means are well-known to specialists, there is no need of describing them. The use of thin transparent laminating coatings allows to increase the plastic card service life and does not impede the reading of biometric images from a plastic cards in the reflected and transmitted light. A card can be created with an increased protection and secrecy, as it has been described, for example, in US 4999065. However the availability of an image of the user biometric parameter directly on a plastic card provides its protection better than any other complicated systems, as it makes it practically impossible to use cards by any other person rather than the user. Coded information can be additionally recorded into biometric key 20, for example, in the form of an n-dimensional bar-code, with the coded information recorded area being selected close to the image size. The coded information may contain, for example, data on the user biometric parameter. In this case, the optical image and the coded information will preferably be recorded by means of various printing means, for example, various paints being non-transparent and/or reflecting radiation in various spectral intervals of the optical range. It is also desirable that the image and the coded information should be placed in a single readout area, which dimensions are determined by dimensions of the photo-sensitive surface of the readout sensor but are separated spatially. In this case, the image is preferably located in the centre of the readout area and the coded information is located in the edge zone of this area.

The main component of subsystem 30 for generation and storage of the verified electronic code database is processor 32 equipped by the corresponding peripheral devices 34 and connected with the outlet of processing device 14 for the reception of processed electronic copies of optical images being generated by this device. In the preferable version of implementation, subsystem 30 is a personal computer. As it will be described in detail later, this subsystem is designed for the conversion of electronic copies coming from device 14 into verified electronic codes of the corresponding user biometric parameter (or biometric parameters) as well as for generation and storage of database 38 of such codes. In the alternative version of implementation of subsystems 10 and 30 (not shown), processing device 14 is a part of subsystem 30, which one outlet in this case shall be connected with device 18 for application of optical image on biometric key 20. It is possible to implement subsystem 30 and device 14 for the electronic copy processing on one personal computer.

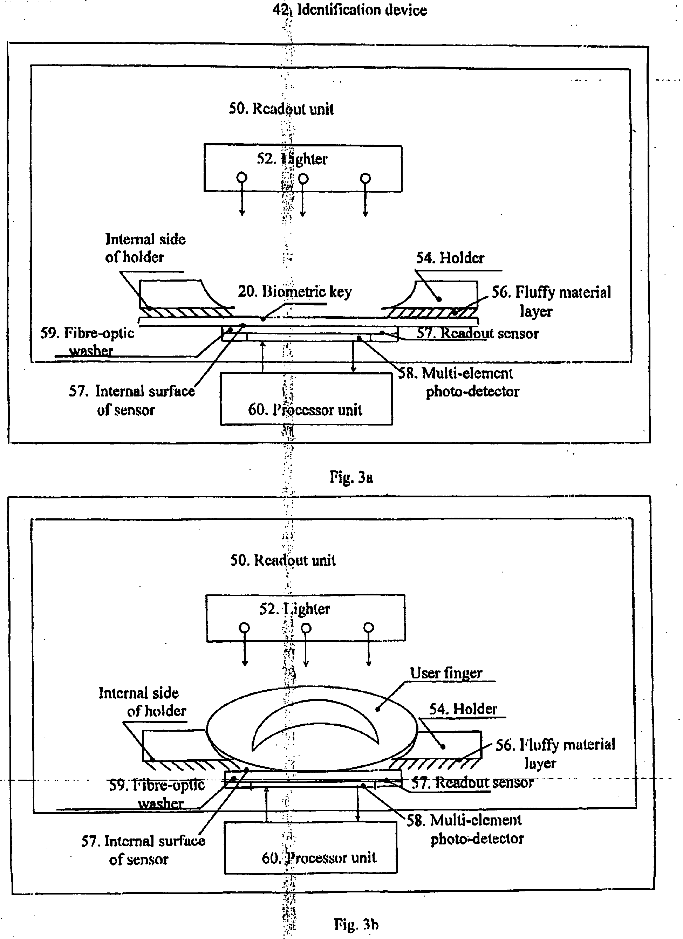

Identification subsystem 40 in its preferable version is an identification device 42 connected to database 44 of subsystem 30 data with a possibility of data exchange. One of the preferable versions of implementation of device 42 is given in Fig. 3. In this version, device 42 contains a readout unit 50 and a processor unit 60 connected to the readout unit outlet. Readout unit 50 in the given version consists of a lighter 52, a holder 54 of biometric key 20 in the form of a plastic card and a readout sensor 57 with a multi-element photo-detector 58 (matrix or linear) being sensitive in the selected spectral interval of the optical range.

At the use of the biometric key in the form of a plastic card and at the selected spectral interval in the near IR-region, the preferable version of photo-detector 58 is a matrix detector with the size of photo-detecting surface being not less than 8 x 12 mm, with the number of photo-detecting elements being not les than 200 x 300, with a fibre-optic washer 59 generating the inlet surface of sensor 57. A specific version of the sensor can be the DactoChip DC-21 model with the size of photo-detecting surface being equal to 10 (H) x 15 (V) mm and with the number of photo-detecting elements of 512 (H) x 576 (H), with the fibre-optic washer of the brand 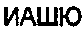 200370002 TY with the diameter of one optical fibre being equal to 6 µm. At the use of photo-detector 58 in the form of a ruler, the device can be equipped by a scanning mechanism providing reciprocal photo-detector movement in the plane being parallel to the plane of fibre-optical washer 59. Alternatively, scanning can be carried out by moving the biometric parameter in respect to the ruler of photo-detector 58.

Lighter 52 is preferably made of the impulse type and contains not less than one light-emitting diode (LED), for example two LEDs of the brand 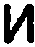 PC-1-800/90 emitting light in the selected spectral interval (λ = 800 nm, ∠ = 90°).

It was assumed earlier that in order to obtain a uniform fingerprint image in the light transmitting through the finger, it shall be illuminated non-uniformly directing more light into the volumetric part of the figure, as it is known that the light scattering in any medium, including finger, is proportional to the light transmission path.

The authors of the invention have experimentally proved that such diffuse scattering really occurs at the local illumination of the finger by a narrow-directed light, however this fact with application to this invention is not significant, as the narrow-directed illumination is unsuitable for raying of thin (as compared with a finger) plastic cards, as it creates a high light non-uniformity. At the same time, the authors have experimentally established that at the initial uniform diffuse illumination of the sensor surface, the same uniform illumination (raying) occurs for both the plastic card and the finger at the use of a lighter operating in the near IR-region of the spectrum.

Holder 54 shall tightly press the plastic card against the inlet surface 59 of sensor 57 and at the same time not admit any surface damage of plastic card 20 at its mechanical movement between the surfaces of holder 54 and sensor 57. In order to meet this requirement, holder 54 is preferably made from a metal (for example, aluminium), on which internal (contacting with the plastic card) side 55 a layer 56 of a fluffy material (optical suede) is glued. Such design provide an easy and high-precision placing of the plastic card over sensor 57 without the use of moving mechanical parts in the design of readout unit 50.

A distinctive peculiarity of the readout unit 50 in the given version of the device is the fact that is provided a possibility of bringing into contact with the inlet surface 59 of sensor 57 of not only the biometric key 20 but also directly any finger of the user being identified, as it is schematically shown in Fig. 3B. So holder 54 combines two functions: it fixes both the plastic card, and the user finger. To this end, holder 54 in the centre has a hollow enabling the user to fix a finger conveniently on the inlet surface of the sensor. Normally the finger holder is installed tightly pressed against the dactyloscopic sensor (sensor 57). However the fixation of the bottom plane of the holder, proposed by the authors and shown in Fig. 3, at the height of the plastic card in respect of the inlet surface of the sensor also allows to provide a good contact between the user finger and the inlet surface of the sensor. It is evident that in the given holder the illumination of the finger being placed into it is provided from the side being opposite to the area of contact between the finger and photo-detector 58 and can be carried out from the top or from the sides.

Processor unit 60 is preferably made on the basis of a suitable personal computer of the PII-400 level with the corresponding peripheral devices (not shown). This computer is connected to the outlet of the readout unit 50, for example, by means of the corresponding cable connected to the parallel port of the computer. The processor unit 60 shall be equipped by means for generation of the electronic code of the readout image and the readout biometric parameter as well as by means for comparison of the electronic code of the readout image with the electronic code of the readout biometric parameter or verified electronic codes. These means are preferably software programs, for example, made on the basis of a standard dactyloscopic identification program; however any of then can also be implemented in the form of a separate specialised electronic module being a part of a computer or made separately from it.

In the case when coded data are additionally applied on the biometric key, for example in the form of an n-dimensional bar-code, readout unit 50 and processor unit 60 shall be made with a possibility of reading of the specified data and it decoding respectively. Meeting if this condition is facilitated at placing of the readout image and the coded information in a single readout area, due to which a single readout sensor 57 can read out both the image and the coded information.

Then the main stages of the identification method under this invention will be described.

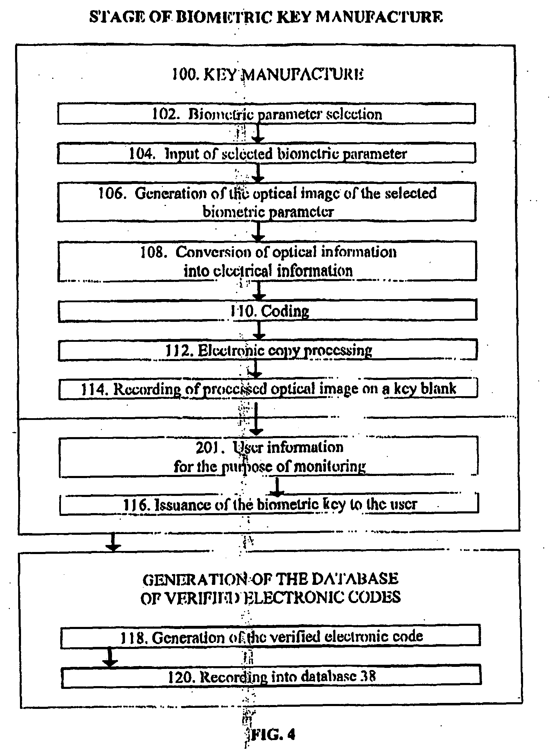

The first stage 100, when the manufacture of biometric keys and preferably databases takes place, is performed with the use of subsystems 10 and 30 shown in Fig. 1. As shown in Fig. 4, the implementation of this stage begins from operation 102 for the biometric parameter selection of a biometric parameter (or parameters) for system 1. The second operation 104 consists of the input of the selected user biometric parameter included into the variety of users by system 1, in the field of vision of the image generation device 12 of subsystem 10. With application to the considered version of the method under this invention, the selected biometric parameter is a print of a certain user finger.

The next operation 106 for generation of the optical image of the selected biometric parameter of the given user, i.e. obtaining of optical information unambiguously corresponding to the given biometric parameter, is carried out with the use of the corresponding device 12 of subsystem 10 (see Fig. 1), for example, a readout unit (similar to unit 50 shown in Fig. 3b), which also performs the subsequent operation 108 for conversion of the optical information into electric information, with obtaining of an electronic copy of the biometric parameter, i.e. the corresponding set of electric signals unambiguously matching the specific biometric parameter.

The next operation 110 is coding, i.e. conversion of the electronic copy into the digital code of the selected biometric parameter. As it is shown in Fig. 1, this operation is executed in device 14 for electronic copy processing connected to the outlet of device 12.

It is expedient to use device 14 also for execution of operation 112 - electronic copy processing with isolation of information from it necessary and sufficient for the biometric parameter identification. This operation preferably includes binarisation of the electronic analogue of the grey-scale fingerprint being generated by device 12 (see Fig. 5A) with obtaining of the processed analogue, so-called "skeleton" (see Fig. 5B) of a fingerprint with constant line thickness reflecting only those image features, which are taken into account at identification. The image processing monitoring can be carried out, for example, by means of a display 16 being a part of subsystem 10. The electronic copy of the selected biometric parameter being processed is fed to a printer or any other suitable device 18 for application of an optical image in order to execute operation 114 for recording of the processed optical image at the biometric key blank, with obtaining of biometric key 20. As it has been mentioned, this record is made in the image area made from a material (for example, polyvinylchloride) being semi-transparent in the selected spectral interval of the optical range. The recording is performed with the scaling being equal or close to 1, i.e. the processed fingerprint image being recorded (see Fig. 5B) by its dimensions equal or close to the real fingerprint, and, more precisely, to those parameters, which are taken into account at identification, namely: reflects the papillary line pattern. In order to carry out the recording, paints or other printing means are used, which are non-transparent or reflect radiation in the specified spectral interval, for example, a black tape of the Pro-L printer manufactured by Fargo.

Operation 114 for the processed image recording can also provide recording of any user data or any other necessary information on a blank of the biometric key 20, for example, that given in Fig. 2. This information can be entered into subsystem 10 by means of peripheral devices, for example, keyboard 15 or any external systems not shown in Fig. 1. In the alternative version, any other information (which application on the biometric key is not obligatory for the implementation of the method being described) can be recorded on the biometric key both before and after execution of operation 114.

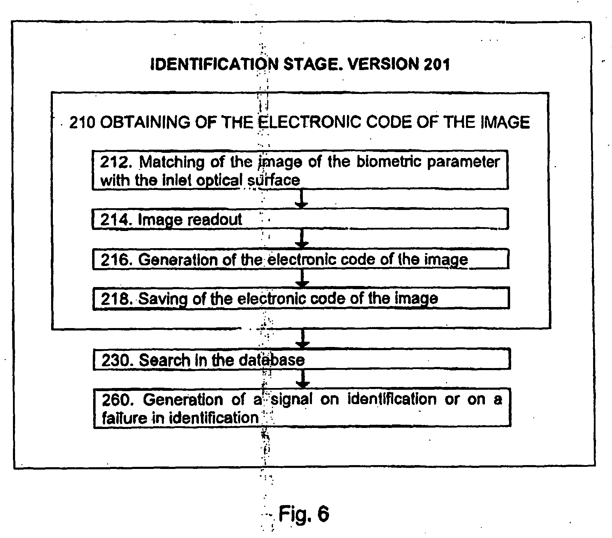

After that, with the use of subsystem 40, procedure 201 is performed for the user identification according to the biometric key 20 and the selected fingerprint (performance of the given identification version will be described later, with reference to Fig. 6). In case of an identification failure, the key is rejected and the operations described shall be repeated in order to manufacture a valid key.

In case of confirmation of identification, the biometric key is recognised valid and can be issued to the user (operation 116). In this case, the digital information being used for recording of the optical image on the biometric key will also enter into subsystem 30 for generation and storage of the verified electronic code database. Here in processor 32, its processing will be completed, i.e. operation 118 for generation of the verified (i.e. unambiguously matching) electronic code of the selected biometric parameter, which enters for storage into database 38 (operation 120).

All operations described above are performed for all persons included into the variety of users by the identification system under this invention.

For the simplicity of understanding, the first stage of implementation of the given method was described in the simplest version. It is evident that in case of identification by several biometric parameters, operations 102-120 shall be repeated for each of the parameters. In order to enhance system operation reliability, several optical images can be generated for each selected biometric parameter at the execution of operation 106, out of which, upon results of the reference identification, the final selection of one image being the best or generalised to be applied on the biometric key shall be carried out. In this case, verified electronic codes of all generated optical images of one biometric parameter cab be formed and entered into database 38.

The enhancement of the identification system reliability can also be reached by the manufacture of all or at least a part of biometric keys in several copies.

The with the reference to Fig. 1, 3 and 6, one of the preferable versions of implementation of the second stage of the proposed method will be considered, namely, the conduction of user identification by biometric key. In order to implement this version, it required to provide a possibility of access from means 68 for electronic code comparison of the processor unit 60 of the identification device 42 to database 38 of system 1, as shown in Fig. 1. Alternatively, the whole database 38 or its corresponding fragment can be transferred into the identification device 40, which in that case can operate fully independently. This version can be expedient, for example, in cases when the manufacture and use of biometric keys is carried out in different organisations or if a variety of independently functioning identification devices is used installed at a considerable distance from the place of location of subsystem 30 for generation and storage of the verified electronic code database.

It can be seen from Fig. 6 that in this version the identification stage 201 includes procedure 210 for obtaining of an electronic code of the image. For its execution, the user shall enter his/her biometric key into holder 54 of the readout unit 50 of the identification device 42, i.e. perform operation 212 of matching of the biometric parameter image on the biometric key 20 with the inlet optical surface of the readout sensor 57. The readout unit consecutively executes operations 214, 216 for reading out of the specified image and generation of an electronic code of the image. At the execution of operation 216, the same electronic code format is used as at generation of the verified electronic codes (during operation 118) or any other format permitting a possibility of comparison of the electronic code of the image with the verified electronic codes. Procedure 210 is terminated by operation 218 for recording of the electronic code of the image.

Then operation 230 for the search in database of a verified electronic code, which, in essence (i.e. with the accuracy up to the established matching threshold), coincides with the electronic code of the readout image. The reliability of such search is very high, in the first place, because the image recorded on the biometric key is optimised for the search purposes by means of exclusion of all excessive and interfering information (as it was described earlier) and, in the second place, due to the fact that the key manufacture technology provides a high image stability in time, i.e. it is not subject to temporal changes being typical, for example, for real fingerprints (in particular, in connection with possible damage and/or contamination). In addition, holder 54 of device 42 provides very thin and stable combination of the biometric parameter image on the biometric key with the inlet surface of the readout sensor 57. Practice shows that one cannot reach similar stability in respect of user fingers, as at least a part of users are characterised by a low reproducibility of placing a finger on the readout sensor. On average, from 10% to 20% users have difficulties with dactyloscopic identification whereas the error level in case of application of the barometric key under this invention is significantly lower.

If as a result of search has been found, at least one verified electronic code matching the readout image code, device 42 will generate the corresponding (visual, audio and/or any other) signal on the identification taken place (operation 260). Otherwise a signal on the negative identification result will be issued. In parallel, the corresponding signal can also be given to any executive mechanism (mechanisms), for example, to a mechanism of automatic opening of a door into a room with controlled access.

It is evident that in case of the use of a biometric key with images of several parameters, all above-described operations of this stage will be repeated for all these images. At that, the symmetrical location of the biometric parameter images on the biometric key in respect of its centre allows to sufficiently simply provide the consecutive matching of specified images with the inlet optical surface of the readout sensor 54 by means of turning of the biometric key 20 around the axis passing through its centre perpendicular to the key plane.

Though the identification version being described provides, with high reliability, the confirmation of authenticity of the image presented in order to identify the user, it in essence does not identify the user itself but only the biometric key, which it represents, i.e. does not prevent a danger of presentation of the key not by the person, to whom this key was issued.

The alternative versions of the proposed method are free from this limitations, according to which both the selected biometric parameter and the biometric key are jointly used for the identification purposes. First an identification version will be considered, which can be implemented without calling the database.

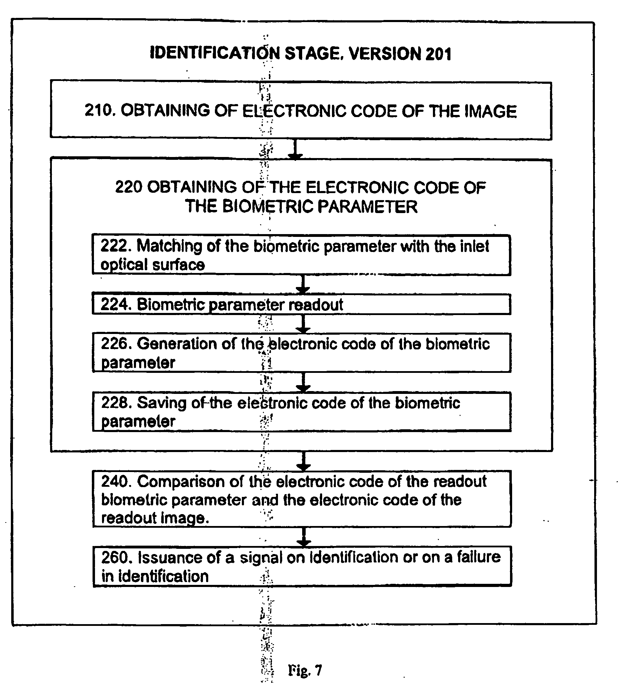

In the given version, the identification stage 201 provides the execution, in any order, of the above-mentioned procedure 210 for obtaining of the electronic code of the readout image and procedure 220 for obtaining of the electronic code of the n\biometric parameter (see Fig. 7).

Procedure 220 consists of operations 222-228 similar to the described operation 212-218 but being executed at placing of a user finger carrying the selected biometric parameter into the readout unit 50. In order to provide the compatibility of the given version of implementation of the method with other alternative versions, it is expedient to use the same electronic code format at the execution of operations 216, 226 as at generation of the verified electronic codes (during operation 118) or any other format permitting a possibility of comparison of electronic codes of the readout image and the readout biometric parameter with the verified electronic codes.

Upon termination of procedures 210 and 220, processor unit 60 of the identification device 42 performs operation 240 for comparison of the electronic code of the readout biometric parameter and the electronic code of the readout image. Upon results of this comparison, device 42 generates the corresponding (visual, audio and/or any other) signal on the identification taken place or on the identification failure.

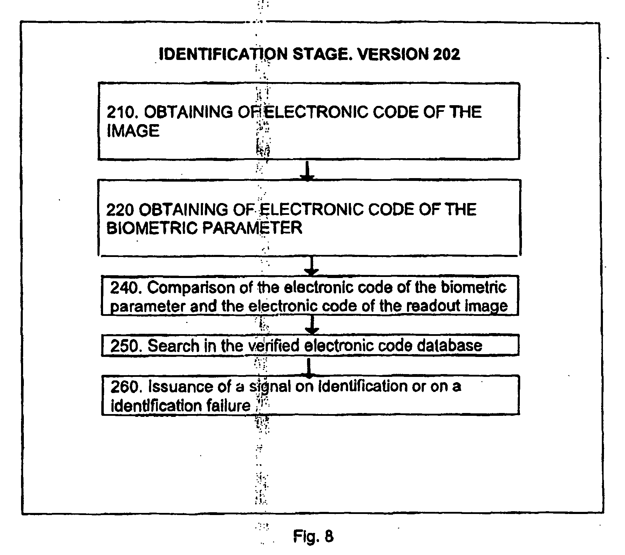

Fig. 8 shows another version of implementation of the identification stage 202 providing the attraction of both the biometric parameter and its image with calling the database. This version, like version 201 shown in Fig. 6 and 7, includes procedures 210 and 220 for obtaining of electronic codes in combination of the described operation 240 for the comparison of these electronic codes and with the additional operation 250 for the search in the database for a verified electronic code coinciding, in essence, with the electronic code of the readout biometric parameter and/or readout image. In case of application of the given version, the increase of probability of the accurate identification can be reached not only by the conduction of identification by several biometric parameters and/or several images of these parameters but also with the use of several verified electronic codes corresponding to each or several biometric parameters out of the selected ones. It allows to make the identification probability being close to 100% and, accordingly, reduce the error probability practically to zero.

One should also note that the described versions of identification with the use of the optical image of the biometric parameter can be used in combination with other suitable identification methods, for example, by voice, secret personal identification number (PIN), password, etc. In particular, a high identification effectiveness with the use of this invention has been proved by its experimental verification conducted on a group of users being employees of the applicant-company of this invention with the use of biometric keys in the form of plastic cards carrying processed optical images of two fingers with symmetrical location of images in respect of the central point of the map. These keys have been used in combination with "live" fingerprints and personal numbers of the users being entered by them on the keyboard of the identification device 42.

For specialists in the given area, numerous modifications, which can be introduced into this invention without coming out beyond its limits, will be evident. Foe example, instead of fingerprints, any other biometric parameters can be used, which allow to generate and record their optical images. The biometric key body (except the image area) can be made from any strong and safe material; any shape providing a possibility of a tight contact of the image area or areas with the inlet surface of the readout sensor can be given to the keys. Though the described design of the sensor being capable to read out information directly from a finger or a biometric key seems to be preferable; for several versions of implementation of the invention, sensors designed for the operation only with biometric keys of various shape are also suitable.

The functions of the device for electronic copy processing in the subsystem for the manufacture of biometric keys, the subsystem for generation and storage of the verified electronic code database and the processor unit of the identification device can be made on the basis of a single central computer connected with wired or wireless communication lines with a device for generation of the image of the selected biometric parameter, with the device for recording of the image and with all identification subsystems. One or two readout sensors and one or two holders, one of which is optimised for installation of the biometric key into it, and the second one - for placing of the user finger, can be provided in the identification device.

The readout device being described can also be used as an image generation device. In addition, the readout device can be equipped by means providing a possibility to surely distinguish electronic codes being obtained from a real biometric parameter and from its optical image on the biometric key, for example, by the availability of the pulse (see US 3639905; WO 98/27509) or other physiological characteristics (as it is described in US 5719950). The availability of such means considerable reduces the probability of forgeries, i.e. contributes to further enhancement of the identification reliability.

## Claims

1. A user identification method comprising:
(a) providing an image of a selected biometric parameter of a given user to be identified, for example, a fingerprint of the given user, on an inlet optical surface of a readout sensor (57) made on the basis of a multi-element photo-detector (58) sensitive in a selected spectral interval, wherein said image is formed on a biometric key (20) of the given user in an area made from a material being semi-transparent in the selected spectral interval, with the use of a printing means, for example, a paint which is non-transparent or reflects a radiation in.said selected spectral interval;
(b) reading said image provided on said inlet optical surface by the readout sensor (57) and generating its electronic code;
(c) providing the selected biometric parameter of the given user on said inlet optical surface;
(d) reading said selected biometric parameter provided on said inlet optical surface by the readout sensor (57) and generating its electronic code in a format enabling a comparison of said electronic code of the biometric parameter with said electronic code of said image;
(e) comparing said two electronic codes; and
(f) outputting a result of identification of the given user, the result being based on said comparison.

2. The method as per claim 1, **characterized in that** each biometric key (20) out of at least a part of a variety of biometric keys (20) contains images of at least two selected biometric parameters of the given user located central-symmetrically on the biometric key (20) ;
operations (a) and (b) are performed for all images contained on the biometric key (20);
operations (c) and (d) are performed for all selected biometric parameters of the given user;
operation (e) is performed for electronic codes of all readout biometric parameters and all readout images; and
operation (f) is performed on the basis of the results of comparison of electronic codes of all readout biometric parameters and all readout images.

3. The method as per any of the previous claims, wherein the image is a binary black-and-white image.

4. The method as per any of the previous claims, wherein a fingerprint is selected as biometric parameter.

5. The method as per claim 4, **characterized in that** the operation (b) of reading said image additionally includes image processing providing enhancement of reliability of results at the execution of operation (e) of comparing said two electronic codes.

6. The method as per claim 5, **characterized in that** the image processing includes generation of a fingerprint skeleton with constant line thickness not less than doubling the resolution of the readout sensor (57).

7. The method as per any of the previous claims, wherein a plastic card is selected as biometric key (20).

8. The method as per any of the previous claims, wherein during the operation (b) of reading said image the image area is illuminated from the side reverse in respect of the side, on which the image has been generated.

9. The method as per any of the previous claims, wherein a coded information is additionally recorded in a coded information recording area on the biometric key (20), for example, in the form of an n-dimensional bar-code, with the dimensions of the coded information recording area being selected close to the image dimensions.

10. A user identification device comprising:
a readout unit containing at least one readout sensor (57), the readout sensor (57) having an inlet optical surface and being provided with a multi-element photo-detector (58) sensitive in a selected spectral interval, the readout unit adapted to read on said inlet optical surface a selected biometric parameter of a given user and to read on said inlet optical surface an image of the selected biometric parameter from a biometric key (20) of the given user out of a variety of biometric keys (20), each biometric key (20) being intended for identification of the given user out of a variety of users and containing an area made from a material being semi-transparent in the selected spectral interval, wherein said image of the selected biometric parameter is formed in said area with a selected scaling factor;
a lighter (52) adapted to provide uniform illumination of the readout sensor (57) by emitting radiation in the selected spectral interval;
a holder (54) for installation and fixation of each biometric key (20), the holder (54) being adapted to bring said image of the selected biometric parameter into contact with the inlet optical surface of the readout sensor (57); and
a processor unit (60) connected to an output port of the readout unit, provided with a generating means for generating an electronic code of the image read on said inlet optical surface by the readout sensor (57) and an electronic code of the selected biometric parameter read on said inlet optical surface by the readout sensor (57), and further provided with a comparing means for comparing said two electronic codes, with the comparing means being adapted to generate a first signal if said electronic code of said image coincides with the electronic code of the selected biometric parameter and to generate a second signal if said electronic code of said image does not coincide with the electronic code of the selected biometric parameter,
wherein the use identification device is enable to handle biometric keys (20) of at least a part of the variety of biometric keys which contain images of at least two biometric parameters, the images of at least two biometric parameters being located symmetrically in respect of the biometric key (20) and which are provided to the read out sensor (57) by turning the biometric key (20) around the axis passing through its centre perpendicular to the plane of the biometric key (20). , and wherein the user identification device is further adapted to consecutively match the images of at least two biometric parameters with the selected biometric parameter read on said inlet optical surface of the readout sensor (57)

11. The user identification device as per claim 10, wherein the image is a binary black-and-white image.

12. The user identification device as per claim 10 or 11, wherein the scaling factor equals or is close to 1.

13. The user identification device as per any of claims 10-12, wherein the inlet optical surface of the readout sensor (57) is made of an optical fiber.

14. The user identification device as per any of claims 10-13, wherein the biometric parameter is a fingerprint.

15. The user identification device as per claim 14, wherein the image is a fingerprint skeleton with a constant line thickness not less than doubling the resolution of the readout sensor (57).

16. The user identification device as per any of claims 10-15, wherein the biometric key (20) is a plastic card.

17. The user identification device as per any of claims 10-16, wherein the lighter (52) is capable of illuminating the biometric key (20) being installed in the holder (54) from the side being reverse in respect of the side, on which the image is generated.

18. The user identification device as per any of claims 10-17, wherein a coded information, for example, in the form of an n-dimensional bar-code, is additionally recorded on the biometric key (20), the readout unit and the processor unit (60) being capable of both reading the coded information and its decoding.

19. The user identification device as per claim 18, wherein the coded information contains data on the user biometric parameter.

20. The user identification device as per claim 18 or 19, wherein the image and the coded information are located on the biometric key (20) in a single readout area, which dimensions are determined by the dimensions of the inlet optical surface of the readout sensor (57) but are separated spatially.

21. The user identification device as per any of claims 18-20, wherein the image is located in the centre of the readout region and the coded information is located in an edge area of the readout region.

22. The user identification device as per claim 10, wherein the image and/or the coded information are recorded by means of various printing facilities, for example, various paints being non-transparent and/or reflecting radiation in a different spectral interval.

23. The user identification device as per any of claims 10-22, wherein the holder (54) enables a contact between the biometric parameter and the inlet optical surface of the readout sensor (57), and the readout unit is capable of reading the user biometric parameter.

24. The user identification device as per claim 23, wherein the processor unit (60) is capable of storing or receiving verified electronic codes of the biometric parameter in the form of a set of digital signals, each of which unambiguously corresponding to the biometric parameter of the given user out of the variety of users, and the comparing means being capable of comparing the electronic codes of the readout image and the readout biometric parameter with the verified electronic codes.

## Patentansprüche

1. Benutzer Identifizierungs-Verfahren aufweisend:
(a) Bereitstellen eines Bildes eines ausgewählten biometrischen Parameters eines bestimmten Benutzers, der zu identifizieren ist, zum Beispiel eines Fingerabdruckes des bestimmten Benutzers, an einer optischen Eingangsoberfläche eines Auslesesensors (57), der gebildet ist auf der Basis eines Mehrfach-Element-Photodetektors (58), der in einem definierten spektralen Bereich empfindlich ist, wobei dieses Bild gebildet wird auf einem biometrischen Schlüssel (20) des bestimmten Benutzers in einem Bereich, der aus einem Material besteht, das halbtransparent ist in dem bestimmten spektralen Bereich, durch Verwendung von Druckmitteln, zum Beispiel eines Farbauftrags, der nicht transparent ist oder eine Strahlung in dem bestimmten Spektralbereich reflektiert,
(b) Lesen des Bildes, das an der optischen Eingangsoberfläche bereitgestellt wird, durch den Auslesesensor (57), und Erzeugen seines elektrischen Kodes,
(c) Bereitstellen des definierten biometrischen Parameters des bestimmten Benutzers an der optischen Eingangsoberfläche,
(d) Lesen des ausgewählten biometrischen Parameters, der an der optischen Eingangsoberfläche bereitgestellt wird, durch den Auslesesensor (57), und Erzeugen eines entsprechenden elektronischen Kodes in einem Format, das den Vergleich des elektronischen Kodes des biometrischen Parameters mit dem elektronischen Kode des Bildes ermöglicht,
(e) Vergleichen der zwei elektronischen Kodes, und
(f) Ausgeben eines Ergebnisses der Identifikation des bestimmten Benutzers, wobei das Ergebnis auf dem Vergleich basiert.

2. Verfahren nach Anspruch 1, **dadurch gekennzeichnet, dass** jeder biometrische Schlüssel (20) aus wenigstens einem Teil der Vielfalt von biometrischen Schlüsseln (20) Bilder von wenigstens zwei ausgewählten biometrischen Parametern eines bestimmten Benutzers enthält, die zentrisch -symmetrisch sich auf dem biometrischen Schlüssel (20) befinden,
Operationen (a) und (b) für alle Bilder, die der biometrische Schlüssel (20) enthält, ausgeführt werden,
Operationen (c) und (d) für alle ausgewählten biometrischen Parameter des bestimmten Benutzers ausgeführt werden,
eine Operation (e) für elektronische Kodes für alle ausgelesenen biometrischen Parameter und alle ausgelesenen Bilder ausgeführt wird, und
eine Operation (f) auf der Grundlage der Ergebnisse von Vergleichen von elektronischen Kodes von allen ausgelesenen biometrischen Parametern und allen ausgelesenen Bildern ausgeführt wird.

3. Verfahren nach einem der vorhergehenden Ansprüche, wobei das Bild ein binäres Schwarzweißbild ist.

4. Verfahren nach einem der vorhergehenden Ansprüche, wobei ein Fingerabdruck als biometrischer Parameter gewählt wird.

5. Verfahren nach Anspruch 4, **dadurch gekennzeichnet, dass** die Operation (b) des Lesens des Bildes zusätzlich eine Bildverarbeitung aufweist, die eine erhöhte Zuverlässigkeit von Ergebnissen bei der Ausführung der Operation (e) beim Vergleichen der zwei elektronischen Kodes aufweist.

6. Verfahren nach Anspruch 5, **dadurch gekennzeichnet, dass** die Bildverarbeitung die Erzeugung eines Knochengerüst-Fingerabdruckes mit gleichmäßigen Liniendicken, die nicht geringer sind als die verdoppelte Auflösung des Auslesesensors (57) sind, aufweist.

7. Verfahren nach einem der vorhergehenden Ansprüche, wobei eine Kunststoffkarte als biometrischer Schlüssel (20) gewählt wird.

8. Verfahren nach einem der vorhergehenden Ansprüche, wobei während der Operation (b) des Lesens des Bildes das Bildgebiet beleuchtet wird von der Seite, die hinten ist in Bezug auf die Seite, auf welcher das Bild erzeugt wurde.

9. Verfahren nach einem der vorhergehenden Ansprüche, wobei eine kodierte Information zusätzlich aufgezeichnet wird in einem kodierten Informationsbereich des biometrischen Schlüssels (20), zum Beispiel in Form eines n-dimensionalen Bar-Kodes, wobei die Abmessungen des kodierten Informationsaufzeichnungsbereiches nahe den Bild-Abmessungen ausgewählt werden.

10. Benutzer-Identifizierungs-Einrichtung aufweisend:
eine Ausleseeinheit, die wenigstens einen Auslesesensor (57) aufweist, wobei der Auslesesensor (57) eine optische Eingangsoberfläche aufweist und versehen ist mit einem Mehrfach-Element-Photodetektor (58), der in einem ausgewählten Spektralbereich empfindlich ist, wobei die Ausleseeinheit des Weiteren angepasst ist, um an der optischen Eingangsoberfläche einen ausgewählten biometrischen Parameter von einem bestimmten Benutzer lesen zu können, und
um an der optischen Eingangsoberfläche ein Bild des ausgewählten biometrischen Parameters von einem biometrischen Schlüssel (20) des bestimmten Benutzers aus einer Vielzahl biometrischer Schlüssel (20) lesen zu können, wobei jeder biometrische Schlüssel (20) vorgesehen ist für die Identifikation eines bestimmten Benutzers aus einer Vielzahl von Benutzern und
einen Bereich aufweist, der aus einem Material gebildet ist, das halbdurchlässig ist in dem ausgewählten Spektralbereich, wobei das Bild des ausgewählten biometrischen Parameters in dem Bereich mit einem ausgewählten Maßstabsfaktor gebildet ist,
einem Beleuchter (52), der angepasst ist, um eine gleichmäßige Beleuchtung des Auslesesensors (57) durch Strahlungs-Ausstrahlung im ausgewählten Spektralbereich bereitzustellen,
einem Halter (54) für die Einbringung und Halterung von jedem biometrischen Schlüssel (20), wobei der Halter so angepasst ist, um das Bild des ausgewählten biometrischen Parameters in Kontakt mit der optischen Eingangsoberfläche des Auslesesensors (57) zu bringen, und
eine Prozessor- Einheit (60), die mit dem Ausgangsanschluss der Ausleseeinheit verbunden ist und ausgerüstet ist mit einem Erzeugungsmittel zur Erzeugung eines elektronischen Kodes des Bildes, das an der optischen Eingangsoberfläche des Auslesesensors (57) gelesen wurde, und zur Erzeugung eines elektronischen Kodes des ausgewählten biometrischen Parameters, der gelesen wurde an der optischen Eingangsoberfläche des Auslesesensors (57), und weiter versehen ist mit einem Vergleichsmittel zum Vergleichen der zwei elektronischen Kodes,
wobei das Vergleichsmittel angepasst ist, um ein erstes Signal zu erzeugen, wenn der elektronische Kode des Bildes übereinstimmt mit dem elektronischen Kode des ausgewählten biometrischen Parameters und um ein zweites Signal zu erzeugen, wenn der elektronische Kode des Bildes nicht übereinstimmt mit dem elektronischen Kode des ausgewählten biometrischen Parameters,
wobei die Benutzer-Identifizierungs-Einrichtung befähigt ist, um biometrische Schlüssel (20) von wenigstens einem Teil aus der Vielzahl biometrischer Schlüssel (20) zu verarbeiten, welche Bilder von wenigstens zwei biometrischen Parametern aufweisen, wobei die Bilder von den wenigstens zwei biometrischen Parametern symmetrisch angeordnet sind in Bezug auf den biometrischen Schlüssel (20) und welche versehen sind mit einem Auslesesensor (57) durch Drehen des biometrischen Schlüssels (20) um die Achse, die durch das Zentrum senkrecht zu der Ebene des biometrischen Schlüssels (20) verläuft, und wobei die Benutzer-Identifizierungs-Einrichtung weiterhin angepasst ist, um nacheinander die Bilder von wenigstens zwei biometrischen Parametern mit dem ausgewählten biometrischen Parameter, der an der optischen Eingangsoberfläche des Auslesesensors gelesen wurde, abzugleichen.

11. Benutzer-Identifizierungs-Einrichtung nach Anspruch 10, wobei das Bild ein binäres Schwarzweißbild ist.

12. Benutzer-Identifizierungs-Einrichtung nach Anspruch 10 oder 11, wobei der Maßstabsfaktor gleich oder nahe Eins ist.

13. Benutzer-Identifizierungs-Einrichtung nach einem der Ansprüche 10 bis 12,
wobei die optische Eingangsoberfläche des Auslesesensors (57) aus Glasfaserleitem besteht.

14. Benutzer-Identifizierungs-Einrichtung nach einem der Ansprüche 10 bis 13,
wobei der biometrische Parameter ein Fingerabdruck ist.

15. Benutzer-Identifizierungs-Einrichtung nach Anspruch 14, wobei das Bild ein Knochengerüst-Fingerabdruck ist mit einer konstanten Liniendicke, die nicht geringer ist als die verdoppelte Auflösung des Auslösesensors (57).

16. Benutzer-Identifizierungs-Einrichtung nach einem der Ansprüche 10 bis 15,
wobei der biometrische Schlüssel (20) eine Kunststoffkarte ist.

17. Benutzer-Identifizierungs-Einrichtung nach einem der Ansprüche 10 bis 16,
wobei der Beleuchter (52) so ausgelegt ist, dass er in der Lage ist, den biometrischen Schlüssel (20), der im Halter (54) eingebracht ist, zu beleuchten und zwar von der Seite, die hinten ist in Bezug auf die Seite, auf welcher das Bild erzeugt wird.

18. Benutzer-Identifizierungs-Einrichtung nach einem der Ansprüche 10 bis 17,
wobei eine kodierte Information, zum Beispiel in Form eines n-dimensionalen Bar-Kodes, zusätzlich auf dem biometrischen Schlüssel aufgezeichnet ist,
wobei die Ausleseeinheit und die Prozessoreinheit so ausgelegt sind, dass sie in der Lage sind, beides auszulesen, nämlich die kodierte Information und deren Dekodierung.

19. Benutzer-Identifizierungs-Einrichtung nach Anspruch 18, wobei die kodierte Information Daten über den biometrischen Parameter des Benutzers enthält.

20. Benutzer-Identifizierungs-Einrichtung nach Anspruch 18 oder 19, wobei das Bild und die kodierte Information auf dem biometrischen Schlüssel (20) in einem einzigen Auslesebereich untergebracht sind, dessen Dimensionen bestimmt sind durch die Dimensionen der optischen Eingangsoberfläche des Auslesesensors (57), jedoch räumlich getrennt sind.

21. Benutzer-Identifizierungs-Einrichtung nach einem der Ansprüche 18 bis 20,
wobei das Bild im Zentrum des Auslesegebietes und die kodierte Information in einem Randgebiet des Auslesegebietes untergebracht sind.

22. Benutzer-Identifizierungs-Einrichtung nach Anspruch 10, wobei das Bild und/oder die kodierte Information mittels verschiedenartiger Druckeinrichtungen, wie zum Beispiel verschiedenartige Auftrags-Farben, die nicht transparent sind und/oder eine reflektierende Ausstrahlung in verschiedenen Spektralbereichen haben, aufgezeichnet werden.

23. Benutzer-Identifizierungs-Einrichtung nach einem der Ansprüche 10 bis 22,
wobei der Halter (54) so ausgelegt ist, dass er den Kontakt zwischen dem biometrischen Parameter und der optischen Eingangsoberfläche des Auslesesensors (57) ermöglicht, und die Ausleseeinheit in der Lage ist, den biometrischen Parameter des Benutzers zu lesen.

24. Benutzer-Identifizierungs-Einrichtung nach Anspruch 23, wobei die Prozessoreinheit so ausgelegt ist, dass sie in der Lage ist, einen verifizierten elektronischen Kode des biometrischen Parameters in Form eines Satzes von digitalen Signalen zu speichern oder zu empfangen, wobei jeder Satz dieser digitalen Signale eindeutig dem biometrischen Parameter des bestimmten Benutzers aus einer Vielzahl von Benutzern entspricht, und die Vergleichsmittel in der Lage sind, den elektronischen Kode des ausgelesenen Bildes und des ausgelesenen biometrischen Parameters mit dem verifizierten Kode zu vergleichen.

## Revendications

1. Procédé d'identification d'utilisateur comprenant :
(a) la fourniture d'une image d'un paramètre biométrique sélectionné d'un utilisateur donné destiné à être identifié, par exemple, une empreinte digitale de l'utilisateur donné, sur une surface optique d'entrée d'un capteur de lecture (57) réalisée sur la base d'un photodétecteur multi-élément (58) sensible dans un intervalle spectral sélectionné, où ladite image est formée sur une clé biométrique (20) de l'utilisateur donné dans une région faite d'un matériau semi-transparent dans l'intervalle spectral sélectionné, avec l'utilisation d'un moyen d'impression, par exemple, une peinture qui est non transparente ou qui réfléchit un rayonnement dans ledit intervalle spectral sélectionné ;
(b) la lecture de ladite image fournie sur ladite surface optique d'entrée par le capteur de lecture (57) et la génération de son code électronique ;
(c) la fourniture du paramètre biométrique sélectionné de l'utilisateur donné sur ladite surface optique d'entrée ;
(d) la lecture dudit paramètre biométrique sélectionné fourni sur ladite surface optique d'entrée par le capteur de lecture (57) et la génération de son code électronique dans un format permettant une comparaison dudit code électronique du paramètre biométrique avec ledit code électronique de ladite image ;
(e) la comparaison desdits deux codes électroniques ;
(f) la délivrance d'un résultat d'identification de l'utilisateur donné, le résultat étant basé sur ladite comparaison.

2. Procédé selon la revendication 1, **caractérisé en ce que** chaque clé biométrique (20) parmi au moins une partie d'une variété de clés biométriques (20) contient des images d'au moins deux paramètres biométriques sélectionnés de l'utilisateur donné situés de manière symétrique par rapport au centre sur la clé biométrique (20) ;
les opérations (a) et (b) sont réalisées pour toutes les images contenues sur la clé biométrique (20) ;
les opérations (c) et (d) sont réalisées pour tous les paramètres biométriques sélectionnés de l'utilisateur donné ;
l'opération (e) est réalisée pour des codes électroniques de tous les paramètres biométriques de lecture et toutes les images de lecture ; et
l'opération (f) est réalisée sur la base des résultats de la comparaison des codes électroniques de tous les paramètres biométriques de lecture et de toutes les images de lecture.

3. Procédé selon l'une quelconque des revendications précédentes, dans lequel l'image est une image binaire en noir et blanc.

4. Procédé selon l'une quelconque des revendications précédentes, dans lequel une empreinte digitale est sélectionnée comme paramètre biométrique.

5. Procédé selon la revendication 4, **caractérisé en ce que** l'opération (b) de lecture de ladite image comprend en outre un traitement d'image fournissant une amélioration de la fiabilité des résultats lors de l'exécution de l'opération (e) de comparaison desdits deux codes électroniques.

6. Procédé selon la revendication 5, **caractérisé en ce que** le traitement d'image comprend la génération d'un squelette d'empreinte digitale avec une épaisseur de ligne constante non inférieure au double de la résolution du capteur de lecture (57).

7. Procédé selon l'une quelconque des revendications précédentes, dans lequel une carte en plastique est sélectionnée comme clé biométrique (20).

8. Procédé selon l'une quelconque des revendications précédentes, dans lequel durant l'opération (b) de lecture de ladite image, la région d'image est illuminée par le côté opposé par rapport au côté, sur lequel l'image a été générée.

9. Procédé selon l'une quelconque des revendications précédentes, dans lequel une information codée est en outre enregistrée dans une région de stockage d'information codée sur la clé biométrique (20), par exemple, sous la forme d'un code à barres à n-dimensions avec les dimensions de la région de stockage d'information codée choisies comme étant proches des dimensions de l'image.

10. Dispositif d'identification d'utilisateur comprenant :
une unité de lecture contenant au moins un capteur de lecture (57), le capteur de lecture (57) ayant une surface optique d'entrée et étant muni d'un photo-détecteur multi-éléments (58) sensible dans un intervalle spectral sélectionné, l'unité de lecture étant adaptée pour lire sur ladite surface optique d'entrée un paramètre biométrique sélectionné d'un utilisateur donné et pour lire sur ladite surface optique d'entrée une image du paramètre biométrique sélectionné à partir d'une clé biométrique (20) de l'utilisateurs donné parmi une variété de clés biométriques (20), chaque clé biométrique (20) étant destinée à l'identification de l'utilisateur donné parmi une variété d'utilisateurs et contenant une région faite d'un matériau semi-transparent dans l'intervalle spectral sélectionné, où ladite image du paramètre biométrique sélectionné est formée dans ladite région avec un facteur de mise à l'échelle sélectionné ;
une lumière (52) adaptée pour fournir une illumination uniforme du capteur de lecture (57) par l'émission d'un rayonnement dans l'intervalle spectral sélectionné ;
un support (54) pour l'installation et la fixation de chaque clé biométrique (20), le support (54) étant adapté pour amener ladite image du paramètre biométrique sélectionné en contact avec la surface optique d'entrée du capteur de lecture (57), ; et
une unité de traitement (60) reliée à un orifice de sortie de l'unité de lecture, munie d'un moyen de génération pour générer un code électronique de l'image lue sur ladite surface optique d'entrée par le capteur de lecture (57) et un code électronique du paramètre biométrique sélectionné lu sur ladite surface optique d'entrée par le capteur de lecture (57), et munie en outre d'un moyen de comparaison pour comparer lesdits deux codes électroniques, les moyens de comparaison étant adaptés pour générer un premier signal si ledit code électronique de ladite image coïncide avec le code électronique du paramètre biométrique sélectionné et pour générer un deuxième signal si ledit code électronique de ladite image ne coïncide pas avec le code électronique du paramètre biométrique sélectionné,
où le dispositif d'identification d'utilisateur permet de manipuler des clés biométriques (20) d'au moins une partie de la variété de clés biométriques (20) qui contiennent des images d'au moins deux paramètres biométriques, les images d'au moins deux paramètres biométriques étant situées de manière symétrique par rapport à la clé biométrique (20) et qui sont fournis au capteur de lecture (57) en tournant la clé biométrique (20) autour de l'axe passant par son centre perpendiculaire au plan de la clé biométrique (20), et où le dispositif d'identification d'utilisateur est en outre adapté pour faire correspondre consécutivement les images d'au moins deux paramètres biométriques avec le paramètre biométrique sélectionné mesuré sur ladite surface optique d'entrée du capteur de lecture (57).

11. Dispositif d'identification d'utilisateur selon la revendication 10, dans lequel l'image est une image binaire en noir et blanc.

12. Dispositif d'identification d'utilisateur selon la revendication 10 ou 11, dans lequel le facteur de mise à l'échelle est égal ou est proche de 1.

13. Dispositif d'identification d'utilisateur selon l'une quelconque des revendications 10 à 12, dans lequel la surface optique d'entrée du capteur de lecture (57) est faite d'une fibre optique.

14. Dispositif d'identification d'utilisateur selon l'une quelconque des revendications 10 à 13, dans lequel le paramètre biométrique est une empreinte digitale.

15. Dispositif d'identification d'utilisateur selon la revendication 14, dans lequel l'image est un squelette d'empreinte digitale avec une épaisseur de ligne constante non inférieure au double de la résolution du capteur de lecture (57).

16. Dispositif d'identification d'utilisateur selon l'une quelconque des revendications 10 à 15, dans lequel la clé biométrique (20) est une carte en plastique.

17. Dispositif d'identification d'utilisateur selon l'une quelconque des revendications 10 à 16, dans lequel la lumière (52) est capable d'illuminer la clé biométrique (20) installée dans le support (54) du côté opposé par rapport au côté, sur lequel l'image est générée.

18. Dispositif d'identification d'utilisateur selon l'une quelconque des revendications 10 à 17, dans lequel une information codée, par exemple, sous la forme d'un code à barres à n-dimensions, est en outre enregistrée sur la clé biométrique (20), l'unité de lecture et l'unité de traitement (60) étant capable de lire à la fois l'information codée et son décodage.

19. Dispositif d'identification d'utilisateur selon la revendication 18, dans lequel l'information codée contient des données sur le paramètre biométrique d'utilisateur.

20. Dispositif d'identification d'utilisateur selon la revendication 18 ou 19, dans lequel l'image et l'information codée sont situées sur la clé biométrique (20) dans une seule région de lecture, dont les dimensions sont déterminées par les dimensions de la surface optique d'entrée du capteur de lecture (57) mais sont séparées spatialement.

21. Dispositif d'identification d'utilisateur selon l'une quelconque des revendications 18 à 20, dans lequel l'image est située au centre de la région de lecture et l'information codée est située dans une région de bord de la région de lecture.

22. Dispositif d'identification d'utilisateur selon la revendication 10, dans lequel l'image et/ou l'information codée sont enregistrées au moyen de différents moyens d'impression, par exemple, différentes peintures non transparentes et/ou réfléchissant le rayonnement dans un intervalle spectral différent.

23. Dispositif d'identification d'utilisateur selon l'une quelconque des revendications 10 à 22, dans lequel le support (54) permet un contact entre le paramètre biométrique et la surface optique d'entrée du capteur de lecture (57), et l'unité de lecture est capable de lire le paramètre biométrique d'utilisateur.

24. Dispositif d'identification d'utilisateur selon la revendication 23, dans lequel l'unité de traitement (60) est capable de stocker ou de recevoir des codes électroniques vérifiés du paramètre biométrique sous la forme d'un ensemble de signaux numériques, chacun d'eux correspondant de manière non ambiguë au paramètre biométrique de l'utilisateur donné parmi la variété d'utilisateurs, et les moyens de comparaison étant capables de comparer les codes électroniques de l'image lue et du paramètre biométrique lu avec les codes électroniques vérifiés.
